# EUROPEAN PATENT APPLICATION

(11) **EP 2 085 167 A1**
(43) Date of publication of application: **05.08.2009**
(21) Application number: 08425051.3
(22) Date of filing: 30.01.2008
(51) Int. Cl.: B23C 3/32, B23C 7/02, B23Q 5/04

(54) **Notching device for rolls for rolling bars for reinforced concrete**

(71) Applicant: R.M.T. S.r.l. (Revision Machine Tools), 21022 Azzate (VA) (IT)
(72) Inventor: Garavello, Angelo, 21017 Samarate (VA) (IT)
(74) Representative: Lunati, Vittoriano

(57) **Abstract**

There is provided a notching device (1) for rolls (50) for rolling bars (60) for reinforced concrete and the like comprising a machining shaft (2), rotatable about a machining axis (2a), a notching tool (3) constrained to said machining shaft (2a), disposed projecting, in a radial direction with respect to the machining axis (2a), from the machining shaft (2) and suitable to machine by chip removal in a tangential direction with respect to the machining axis (2a), a coupling (4) for a spindle of a lathe, rotatable about an axis of the spindle (4a), drive members (5), suitable to transfer rotational motion from said coupling (4) to the machining shaft (2), and a supporting structure (6), suitable to support the machining shaft (2) in a perpendicular direction with respect to said machining axis (2a).

## Description

The present invention relates to a notching device for rolls for rolling bars for reinforced concrete of the type specified in the preamble of claim 1.

There are currently known steel bars for reinforcing concretes and other building materials.

These bars are substantially realized by cylindrical rods presenting a plurality of projections, approximately helical in shape, suitable to improve bonding between the bars and the concrete in which they are placed.

Said bars are manufactured industrially by means of specific rolls comprising a semi-circular groove, suitable to shape the cylindrical body of the bar, and a plurality of notches, present inside the semi-circular groove and suitable to shape the projections of these bars.

Said rolls have a very high surface hardness and generally between 490 and 560 HB.

The aforesaid prior art has some important drawbacks.

In fact, machining of the rolls, and in particular production of the notches inside the semi-circular grooves, called notching herein, is very difficult and costly.

In fact, the notching must be produced by means of tools with very high rigidity and hardness, which are supported in positions that allow them to enter the semi-circular grooves.

Consequently, this tool must be disposed on a shaft having a diameter smaller than the diameter of the semi-circular groove and having an axial extension that prevents other portions of the tool spindle or of the drive members thereof from interfering with this roll.

This shaft is therefore very flexible due to its slenderness and its length and this can prevent correct notching of the rolls.

This drawback has been overcome by producing specific machine tools suitable to support the shaft that supports the notching tool.

However, these machine tools are very complex and costly. Consequently, maintenance thereon must be performed by skilled personnel.

The machines in question are also very bulky, require large machining areas and are very difficult to transport.

In this situation the technical aim underlying the present invention is to devise a notching device for rolls for rolling bars for reinforced concrete capable of substantially overcoming the aforesaid drawbacks.

Within said technical aim an important object of the invention is to produce a notching device for rolls for rolling bars for reinforced concrete that is simple, sturdy and inexpensive.

Another important object of the invention is to attain a notching device for rolls for rolling bars for reinforced concrete that requires low running and maintenance costs.

Last but not least object of the invention is to produce a notching device for rolls for rolling bars for reinforced concrete that occupies a small volume and machining area and that is easy to transport.

The technical aim and objects specified are achieved by a notching device for rolls for rolling bars for reinforced concrete as claimed in the appended Claim 1. Preferred embodiments are highlighted in the dependent claims.

Other characteristics and advantages of the invention are further elucidated in the following detailed description of a preferred embodiment of the invention, with reference to the accompanying drawings, wherein:
**Fig. 1** shows an axonometric view, in scale, of the notching device according to the invention;
**Fig. 2** shows, in scale, the section II - II, indicated in Fig. 3, of the notching device according to the invention;
**Fig. 3** shows, in scale, a side view of the notching device according to the invention;
**Fig. 4** shows, in scale, the section IV - IV indicated in Fig. 3, of the notching device according to the invention;
**Fig. 5** shows a side view, in scale, of a portion of the notching device according to the invention;
**Fig. 6** shows, in scale, the section VI - VI, indicated in Fig. 5, of the notching device according to the invention;
**Fig. 7** shows an axonometric view of a portion of a bar for reinforced concrete; and
**Fig. 8** schematically shows operation of the notching device according to the invention.

With reference to the aforesaid Figures, the notching device according to the invention is indicated as a whole with the number **1**.

It is suitable to produce a plurality of notches **52** on rolls **50** for rolling bars **60** for concretes or other building materials.

The notching device 1 comprises, briefly, a machining shaft **2**, rotatable about a machining axis **2a**, a notching tool **3** constrained to the machining shaft 2 and disposed externally thereto, or projecting therefrom, in a radial direction with respect to the machining axis 2a, a coupling **4** fastenable to a spindle of a lathe and partly rotatable about an axis of the spindle **4a**, drive members **5**, suitable to transfer the rotational motion from the coupling 4 to the machining shaft 2, and a supporting structure **6**, suitable to support the machining shaft 2 in a perpendicular direction with respect to the machining axis 2a and in proximity to the notching tool 3.

In more detail, the notching tool 3 is suitable to machine by chip removal in a tangential direction with respect to the machining axis 2a, and is therefore realized by a hard stone with cutting edge or several cutting edges.

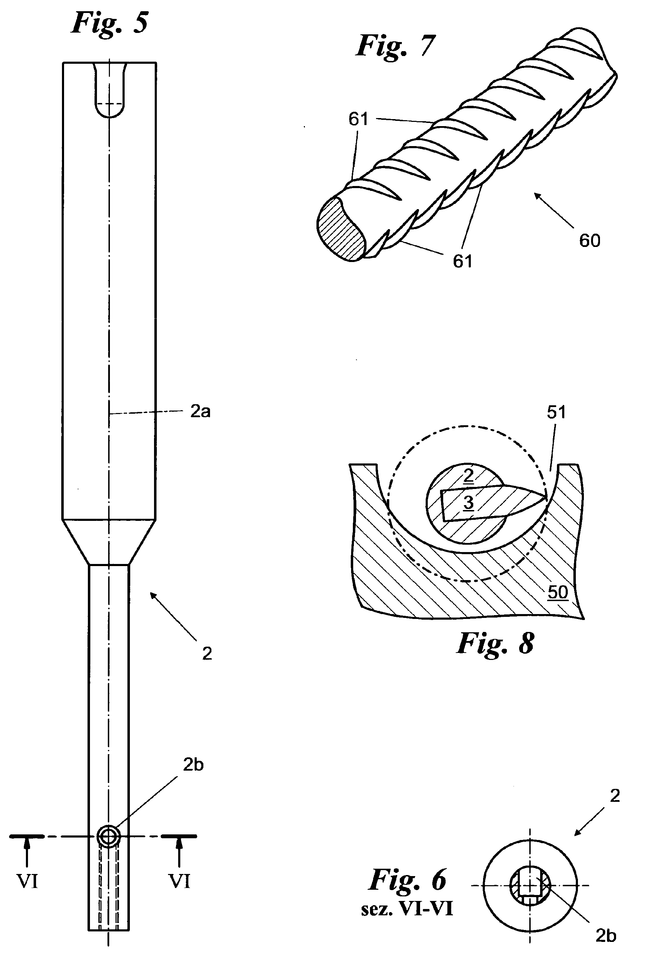

This notching tool 3 is disposed on a specific coupling **2b**, shown in Fig. 6, and in particular on an end portion thereof. This tool is realized by a steel shaft having a length preferably between 15 cm and 30 cm and more preferably between 7 cm and 9 cm. Moreover, it preferably has a variable section that increases as the distance from the coupling 2b increases and, in the area of the coupling 2b, is preferably between 5 mm and 15 mm.

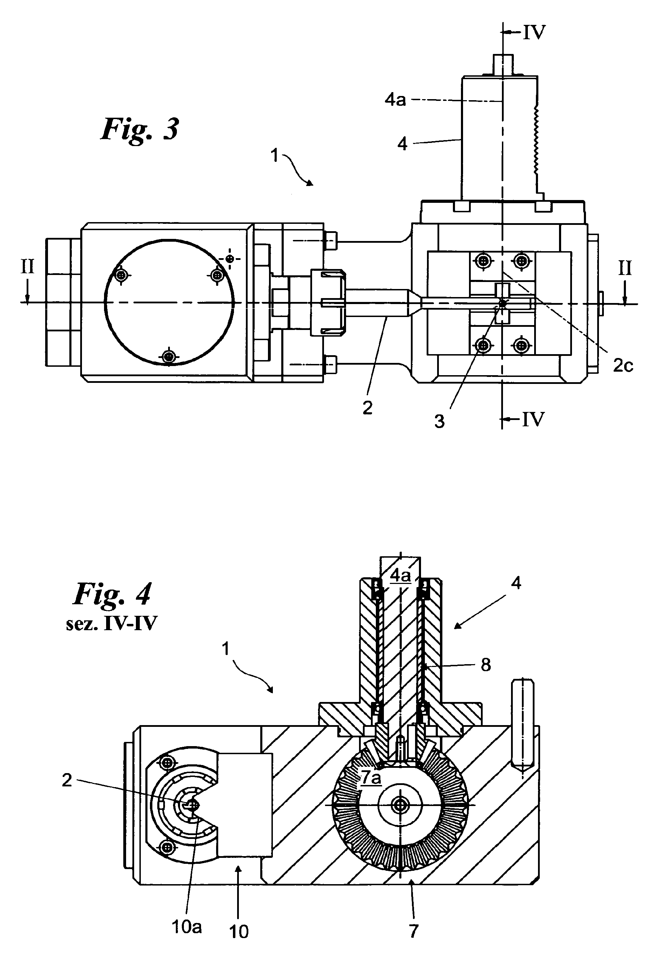

The machining shaft 2 is suitable to be rotated about the machining axis 2a by a lathe constrained to the specific coupling 4. Together with the notching tool 3 and with the coupling 4, it is disposed so that the perpendicular to the machining axis 2a passing through the notching tool 3, indicated in Fig. 3 with the numerical reference 2c, passes in proximity to the spindle axis 4a and preferably substantially along this axis 4a. For example, in Fig. 3 the axes 4a and 2c coincide with a single axis.

Moreover, the machining 2a and spindle 4a axes are preferably reciprocally perpendicular.

The machining shaft 2 and the coupling 4 are mechanically connected by said drive members 5 included in the supporting structure 6.

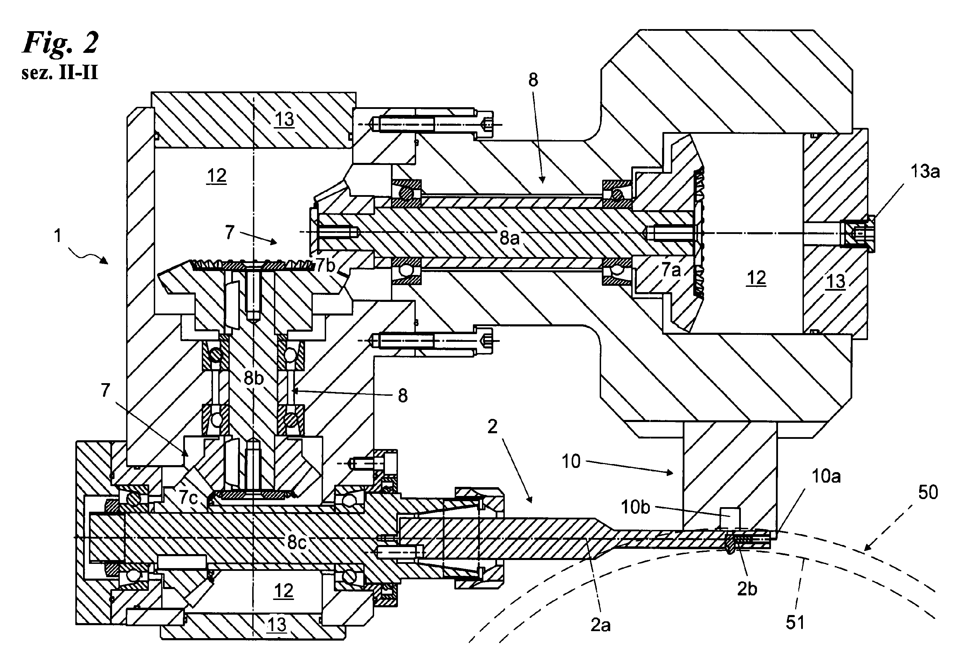

In particular, the drive members 5 are shown in Figs. **4** and **2** and are realized by three pairs of truncated-cone shaped gears **7** reciprocally perpendicular and disposed on three drive shafts **8**.

In detail, a first pair of truncated-cone shaped gears **7a** is shown in Fig. **4**. It connects the coupling 4, the rotatable portion of which is realized by a connection shaft **4b** rotatable about the axis of the coupling 4a on specific ball bearings, to a first drive shaft **8a,** preferably disposed parallel to the machining axis 2a. This first pair of truncated cone shape gears 7a preferably operates with a reduction ratio that decreases the speed and increases the torque of the first drive shaft 8a.

Moreover, the first drive shaft 8a, the first pair of truncated cone shaped gears 7a and the coupling 4 are preferably housed in and constrained to a specific first housing **9**, preferably made of steel and substantially realized by a first approximately prismatic portion **9a,** and suitable to contain the truncated cone shaped pair of 7a, and by a second substantially cylindrical portion **9b** suitable to contain said first drive shaft 8a and specific bearings for rotation thereof.

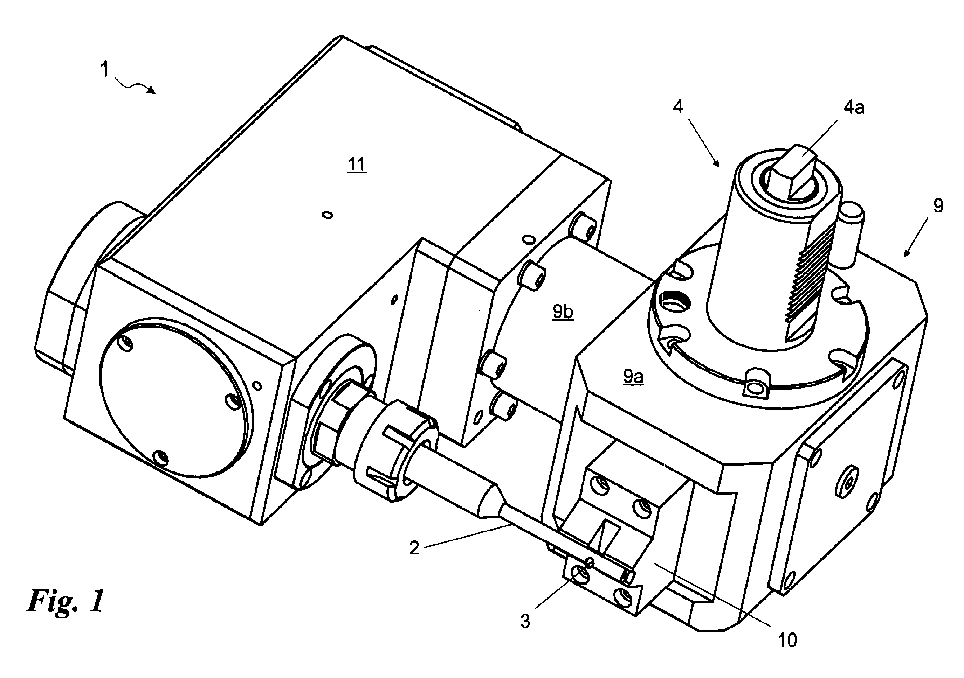

The first housing 1, and in particular the portion 9a, by virtue of the positioning of the notching tool 3 and of the coupling 4, is positioned in proximity to this notching tool 3, as shown in Fig. 1.

A supporting element **10** for the machining shaft 2 is also constrained to the first housing 9, in proximity to the notching tool 3.

The supporting element 10 is in particular realized by a triangular prismatic element having a vertex **10a** facing the machining shaft 2 and countershaped thereto, so as to support this shaft 2 when it is subject to bending, as shown in Fig. 1. The supporting element 10 also comprises a specific groove **10b** suitable to prevent interferences with the notching tool 3 during rotation of the machining shaft 2.

Finally, the position along the axis 2a of the supporting element 10 is preferably adjustable.

The first drive shaft 7a then transmits motion, through a second pair of truncated cone shaped gears **8b**, to a second drive shaft **7b**, preferably perpendicular to the machining axis 2a and to the spindle 4 axis, as shown in Fig. 2.

Also the second truncated cone shaped pair 8b preferably produces a decrease in speed and an increase in torque of the second drive shaft 7b.

The second drive shaft 7b then transmits motion through a third pair of truncated cone shaped gears **8c** to a third drive shaft **7c**, this time preferably without a decrease or increase in speed and in torque.

Said third drive shaft 7c is preferably parallel to and aligned with the machining shaft 2 and comprises means for constraining it thereto, as shown in Fig. 2.

The described second and third drive shafts 7b and 7c, the described pairs of truncated cone shaped gears 8b and 8c and the rolling bearings for rotation thereof are appropriately housed in a second housing **11**, also preferably made of steel, having an approximately prismatic shape and constrained through specific releasable constraining means to the first housing 9.

The notching device 1 also preferably comprises a lubrication system connected directly to the lathe lubrication system constrained to the coupling 4.

For this purpose, the first and second housing 9 and 11 comprise inner chambers **12** sealed by specific covers **13** and the cover disposed on the first housing 9 also comprises a connection **13a** for the lubrication system of a lathe of conventional type.

Operation of a notching device 1, described above in structural terms, is the following.

The coupling 4 is connected to the spindle of the lathe, while the connection 13a is connected to a lubrication system thereof.

The notching tool 3 is then placed in an appropriate position, as shown in Fig. 8, and the lathe is started up.

The lathe transmits motion to the coupling 4, in particular to the coupling shaft 4b and, through the drive members 5, to the machining shaft 2, which starts rotation of the notching tool 3.

The speed reduction ratio, and the consequent increase in torque, is between two and six and is preferably around four. In the meantime, the roll 50 is rotated about its axis.

Due to the combined movements of the notching tool 3 and of the roll 50, along the grooves **51** of these rolls notches are created, suitable to produce the specific projections 61 during rolling of the bars 60.

The depth, distance, frequency and angle of the notches 52 are adjustable according to the settings of the lathe, to the rotation speed of the roll 50, to the positioning and to the length of the notching tool 3.

Moreover, through specific settings, which are considered standard in conventional lathes, it is possible to produce inscriptions or marks indicating the trademark of the manufacturer or the like on the bars 60, by means of the device 1.

As shown in Fig. 2, the device 1 is dimensioned so that the notching tool 3 can enter the groove 51 without other parts of this notching device 1 coming into contact with the roll 50.

In the meantime, the supporting structure 6, and in particular the supporting element 10, supports the machining shaft 2 and allows it to withstand the very high bending stresses due to pressure and to contact with the roll 50.

The invention achieves important advantages.

In fact, the notching device 1 allows a notching machine tool to be attained using a lathe normally already present in mechanical workshops that produce rolls 50.

This notching device is light and easy to transport: in fact, it weighs approximately 40 kg and is very small in size.

Moreover, this device 1 is very simple and sturdy and therefore does not require high maintenance costs.

A further advantage is given by the particular shape and structure of the device 1, in particular by the supporting structure 6 and by the arrangement in space of the notching tool 3.

In fact, these allow a discharge of forces in the direction of the axis of the lathe, having a very high strength, and thus make it substantially possible to produce notches 52 in the grooves 51 of rolls 50 of exceptional hardness.

The invention is susceptible to modifications and variants falling within the inventive concept.

All the details can be replaced by equivalent elements and the materials, the shapes and dimensions can be any.

## Claims

1. Notching device (1) for rolls (50) for rolling bars (60) for reinforced concrete and the like, comprising: a machining shaft (2), rotatable about a machining axis (2a), a notching tool (3) constrained to said machining shaft (2), disposed projecting, in a radial direction with respect to said machining axis (2a), from said machining shaft (2) and suitable to machine by chip removal in a tangential direction with respect to said machining axis (2a), **characterized in that** it comprises: a coupling (4) for a spindle of a lathe, rotatable about an axis of the spindle (4a), drive members (5), suitable to transfer rotational motion from said coupling (4) to said machining shaft (2), and a supporting structure (6), suitable to support said machining shaft (2) in a perpendicular direction with respect to said machining axis (2a).

2. Notching device (1) according to claim 1, wherein said notching tool (3) is disposed so that the perpendicular to said machining axis (2a) passing through said notching tool (3) passes in proximity to said spindle axis (4a).

3. Notching device (1) according to claim 2, wherein said notching tool (3) is disposed so that the perpendicular to said machining axis (2a) passing through said notching tool (3) substantially intersects said spindle axis (4a).

4. Notching device (1) according to one or more of the preceding claims, wherein said machining axis (2a) is perpendicular to said spindle axis (4a).

5. Notching device (1) according to one or more of the preceding claims, wherein said drive members (5) are realized by three pairs of truncated cone shaped gears (7) reciprocally perpendicular and disposed on three drive shafts (8).

6. Notching device (1) according to claim 6, wherein said drive shafts (8) are reciprocally perpendicular.

7. Notching device (1) according to one or more of the preceding claims, comprising a first housing (9) and a second housing (11) suitable to include said drive members (5).

8. Notching device (1) according to one or more of the preceding claims, comprising a lubrication system functionally connectable to the lubrication system of the lathe.

9. Notching device (1) according to claim 8, wherein said first and second housing (9, 11) produce inner chambers (12) sealed by specific covers (13).

10. Notching machine tool (1) for rolls (50) for rolling bars (60) for reinforced concrete and the like, comprising a notching device according to one or more of the preceding claims.
